# EUROPEAN PATENT APPLICATION

(11) **EP 2 730 855 A1**
(43) Date of publication of application: **14.05.2014**
(21) Application number: 12806992.9
(22) Date of filing: 28.06.2012
(51) Int. Cl.: F24J 2/05, F24J 2/24

(54) **RECEIVER FOR A THERMOSOLAR INSTALLATION AND THERMOSOLAR INSTALLATION COMPRISING SAID RECEIVER**

(30) Priority: 05.07.2011 ES 201131141 P
(71) Applicant: Abengoa Solar New Technologies, S.A., 41014 Sevilla (ES)
(72) Inventor: NUÑEZ BOOTELLO, Juan Pablo, 41014 Sevilla (ES); GALLAS TORREIRA, Manuel, 41014 Sevilla (ES)
(74) Representative: Elzaburu S.L.P.
(86) International application number: PCT/ES2012/070479
(87) International publication number: WO 2013/004869

(57) **Abstract**

The invention relates to a solar receiver having a higher yield than a central tower receiver. Said receiver comprises a plurality of absorbent tubes (2) for absorbing incident energy from light guides (8) suitable for capturing solar radiation in solar collector concentration focal points (11), the absorbent tubes (2) being arranged consecutively and in parallel, adjacently in relation to a direction transverse to the longitudinal axis of the absorbent tubes (2), said tubes containing a circulating heat-transfer fluid. The longitudinal axes are contained in at least two planes, defining at least two lines (3, 6) of absorbent tubes (2) arranged in an alternating manner, and partially superimposed. Said receiver also comprises containers (4, 5) subjected to a vacuum in order to enclose the absorbent tubes (2) and reduce the losses by convection.

## Description

### OBJECT OF THE INVENTION

The object of this invention is included in the scope of solar thermal technology, specifically in the field of solar thermal power plants, albeit direct steam production plants for Rankine cycle, or air or gas heating plants according to the Brayton or Stirling cycles, and also plants which use a heat transporting fluid in order to produce steam in a subsequent exchanger.

The object of this invention refers to a receiver for a solar thermal installation as well as the solar thermal installation that includes said receiver.

### BACKGROUND TO THE INVENTION

The general principle of solar thermal technology is based on the concept of concentrating solar radiation to heat a heat transporting fluid and thus to generate electricity.

The capture of solar energy and its concentration is one of the main challenges for developing solar thermal plants. Basically, there are two types of concentrating technologies: point focus concentration or linear concentration. Linear concentration is easier to install, as there are fewer degrees of freedom, however the concentration factor is less and therefore temperatures may be lower than focus point concentration.

There are two types of concentrator within the scope of focus point concentrators, Parabolic Disc and Central Tower, and in linear technology the Parabolic Cylindrical Concentrator (PCC) is the oldest and most well developed concentration system, while at present, new versions are emerging, such as Linear Fresnel Collectors (LFC).

The central tower receiver technology is less well established than that of parabolic cylindrical collectors, however, it has potential for very high production and cost reduction. This technology has been installed at prototype levels since the nineteen eighties. The first commercial plant was the PS10, which has been operating for 5 years with exceptional performance levels. Currently, considerable improvements are being made in costs and performance which will make this technology extremely competitive in the midterm.

Operation of the central tower receiver technology is based on use of a plurality of double axle tracker mirrors or heliostats which capture direct sunlight and concentrate it in a receiver situated at the top of a tower. A fluid circulates through the interior of this receiver which is heated and used in a Brayton, Rankine or Stirling cycle in order to generate electricity. It may be possible to store the heat energy to reduce electricity during hours when there is no sunlight (at night or during transitory periods of cloudy days).

Patent documents ES 8503114, ES 8506393 and WO 200812390 describe some examples of this central tower receiver type solar thermal installations.

Central tower receiver plants have a number of disadvantages, some of which are mentioned below:
- The high installation cost due to the need for a receiver at the top of the tower
- Reduced performance due to a number of optical and geometric effects relating to the fact that the sun's rays do not fall parallel to the optical axis of the heliostats, so that the plant's efficiency is hampered by the so called cosine effect, which may be mitigated by increasing the height of the tower, thereby increasing installation costs as mentioned previously;
- Difficulties in providing a substantially uniform irradiance distribution and
- The number of heliostats in a field are reduced because they cannot be situated too far from the tower, due to the fact that losses are generated through atmospheric transmissivity and overflow from the receptor, in the latter case due to the fact that a heliostat which is very far from the tower generates too wide a patch in the receiver, thus slightly reducing energy concentration.

Furthermore, the aforementioned documents describe tower receivers configured on the basis of pipes filled with a heat transmitting fluid which is heated by the incidence of solar light.

The purpose of this invention is to remedy the disadvantages mentioned and to provide receivers for solar thermal plants with improved performance and yield.

### DESCRIPTION OF THE INVENTION

The initial object of this invention is a receiver for a solar thermal installation in which said receiver comprises a plurality of absorber tubes which incorporate in their interior a heat transporting fluid, which may be circulated through the absorber tubes. The absorber tubes are adapted to receive radiation in a manner substantially perpendicular to their longitudinal axis. The absorber tubes are arranged according to one or various modules, which include a plurality of absorber tubes arranged consecutively in adjacent position in a direction transversal to the longitudinal axis, where the longitudinal axis of the absorber tubes of each module are contained in at least two planes, so that the longitudinal axis of a particular absorber tube is not contained on the same plane as the longitudinal axis of the immediately adjoining absorber tubes. The preceding description is equivalent to arranging absorber tubes in at least two rows, in an alternate manner, and partially superimposed in normal direction on the planes defined by the longitudinal axis, in order to ensure that substantially all the incident radiation falls on one of the absorber tubes.

The absorber tubes, which are preferably cylindrical in circular section, are arranged preferably in a vertical manner in order to avoid bending deformation due to their own weight and the weight of the heat transporting fluid. Furthermore, the receiver may include collector pipes, to which all the absorber tubes are connected, albeit in the upper or lower parts, in order to collect the heat transporting fluid that has been heated in all the absorber tubes, thus directing said heat transferring fluid to the heat exchanger or either directly to a turbine.

Each one of the absorber tubes will preferably be fixed to its adjacent absorber tube in order to prevent them from separating, and allowing the incident radiation to escape between the absorber tubes and failing to impact on said absorber tubes. Examples of attachments are clamps or welding.

The absorber tubes are preferably made from steel, or any material having appropriate conductivity and resistance.

The absorber tubes are preferably enclosed in transparent recipients (preferably made from glass) subject to vacuum, in order to eliminate losses through convection. A vacuum adequate for the purposes of the invention is one lower than 10⁻⁷ torr. In accordance with one embodiment, at least one plurality of absorber tubes is housed in at least one of such recipients. In this case, two rows of absorber tubes is the preferred option. In accordance with another embodiment, there is a plurality of such recipients, each adapted to house an absorber tube. According to this second embodiment, the recipients consist of tubes which are coaxial to the absorber tubes, as well as the number of rows into which the absorber tubes are arranged, and the diameter of the absorber tubes and the diameter of the recipients are in related in such a way that they continue to ensure, both for impact perpendicular to the surface of the tube and in the case of some angular deviation with respect to said perpendicular, that incident radiation impacts on any of the absorber tubes, that is, it does not pass to the opposite semi- space with respect to the absorber tubes without falling on any absorber tube. The preferred number of absorber tube rows is three.

In a preferred embodiment, the absorber tubes are covered with absorbent coatings able to support temperatures above 550°-C. By way of example, the tubes subject to vacuum may be covered with absorbent coverings of the TSSS type (which stands for "Thickness sensitive spectrally selective coatings") which has high absorbability (95%) and low emissivity (8%) whereas the tubes which are not subject to vacuum may be covered with paint or TISS (which stands for thickness insensitive spectrally selective coatings) type coatings.

The receiver may also incorporate dichroic reflectors substantially more transparent to the solar spectrum than the emission spectrum of the absorber tubes (surface temperature of up to 700ºC), in such a way that solar radiation is able to pass mainly through the reflector, impacting on the absorber tubes in order to heat them, for example, to approximately 700ºC, and in addition, the radiation emitted by the tubes to 700ºC may be mostly reflected by the dichroic reflector towards the tubes, increasing the absorption performance.

A solar installation provided with a receiver such as that described above, constitutes a second object of the invention.

The receiver in this invention is adapted to function in said installation, which comprises concentrated solar collectors provided with focuses and devices for tracking in two axis, said collectors may be extremely diverse in type: in particular they may be collectors both of the traditional type (paraboloid collectors or with Fresnel lens) and of the advanced type, which use anidolic optics and which are adapted to track the sun directly without cosine effect.

The solar installation may additionally comprise respective flexible light guides adapted to collect at a first end, the radiation in each of the focus points, and to transport said radiation with as little energy loss as possible to the receiver, preferably making the radiation impact substantially in a normal direction to the surface of the absorber tubes. The light guides will preferably make the radiation impact on the absorber tubes from opposite positions with respect to the longitudinal axis of the tubes, in order to prevent thermoelastic stresses on the absorber tubes. In this case, the alternate arrangement of the tubes in at least two rows has the additional advantage that radiation impacting from one side of the tubes does not pass to the opposite side where it could damage the light guides.

The preferred light guides used have a high numerical aperture. In particular, the numerical aperture will preferably be greater than 0.48. PCF type guides are particularly preferred in this case.

In order to obtain increased irradiation, the device may preferably incorporate lenses in order to combine radiation of at least one set of light guides, in at least one combined light guide. Combined guides may also be combined etc.

The installation in this invention will also preferably incorporate a receiver housing to hold the receivers for the light guides. An advantage of this central tower receiver plant configuration is that the receivers are located in a construction which is substantially arranged at ground level, and not in the top of the tower, thus saving on costs and simplifying installation.

The solar thermal installation of the invention may function in accordance with any of the known technologies. In this way, the heat transporting fluid in the receiver tubes may be either air, if the installation is adapted to function with a Brayton cycle, or water, with the installation adapted to function with the Rankine cycle; or helium or hydrogen with the installation adapted to operate with a Stirling cycle, as a salt, with the installation being provided with an exchanger for exchanging heat from the salt with water and thus operating as a Rankine cycle.

Installation of the invention may also incorporate means of storage for temporarily storing energy from the heat transporting fluid which has still not been transformed into electricity. Based on the type of installation, the means of storage may be: hot air (in the case of the Brayton cycle) saturated compressed steam (in the case of the Rankine system with water) or salts at high temperature (in the case of Rankine cycle with salt).

### DESCRIPTION OF THE DRAWINGS

In order to complement this description, and for greater comprehension of the characteristics of the invention, in accordance with a preferred example of a practical embodiment thereof, a set of drawings are included, which form an integral part of this description and which serve as an illustration without being restrictive, represented as follows:
Figure 1- shows a diagram of a solar thermal installation in accordance with the invention.
Figure 2- Shows a diagram of an overhead view of a second embodiment of the receiver, which includes first recipients subject to vacuum for housing in each one a plurality of absorber tubes.
Figure 3- Shows a diagram of an overhead view of the embodiment in figure 3 which additionally includes dichroic reflectors.
Figure 4.- Shows a diagram of an overhead view of a third embodiment of the receiver, which includes recipients subject to vacuum in order for each to house an absorber tube.
Figure 5. - Shows a diagram of an overhead view of the embodiment in figure 5 which also includes dichroic reflectors.

### PREFERRED EMBODIMENT OF THE INVENTION

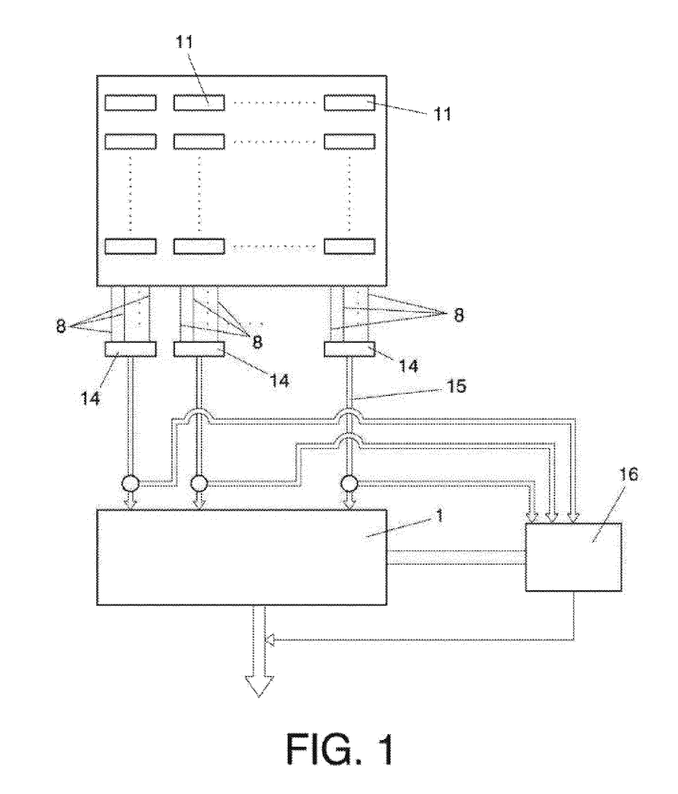

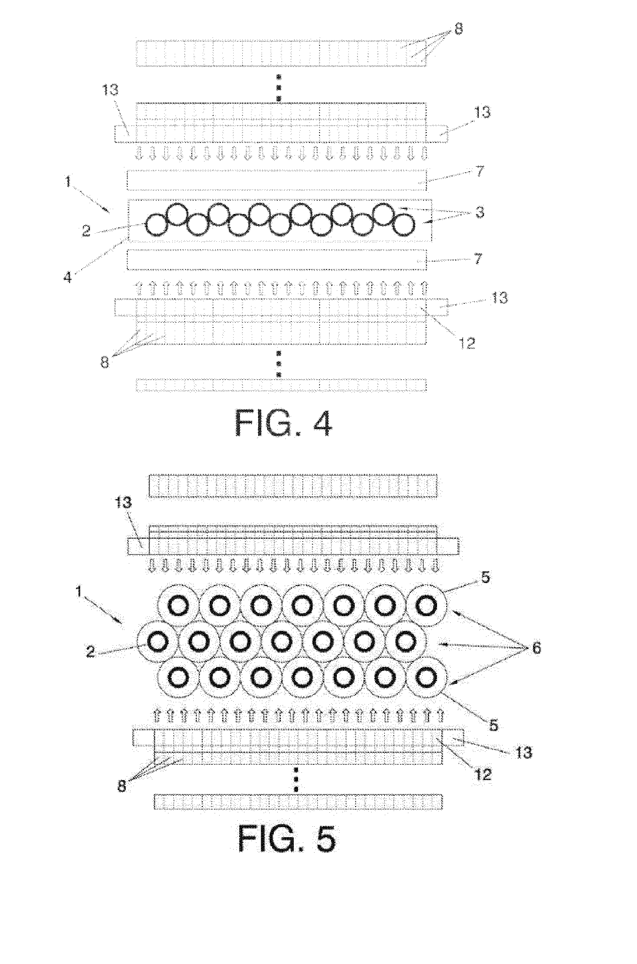

A description of a preferred embodiment of the invention is provided below complemented by figures 1 to 5 attached.

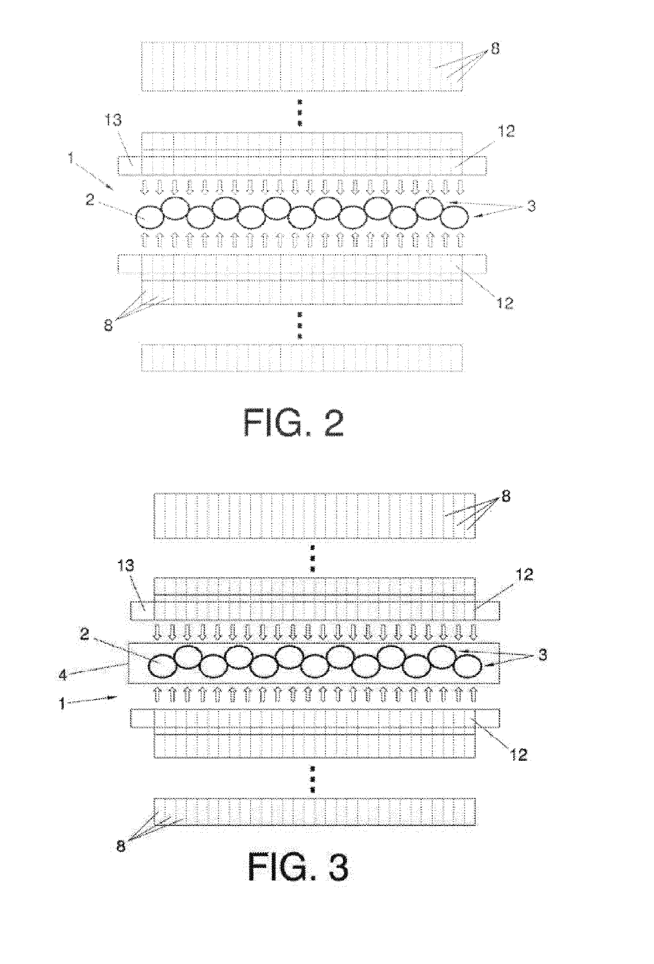

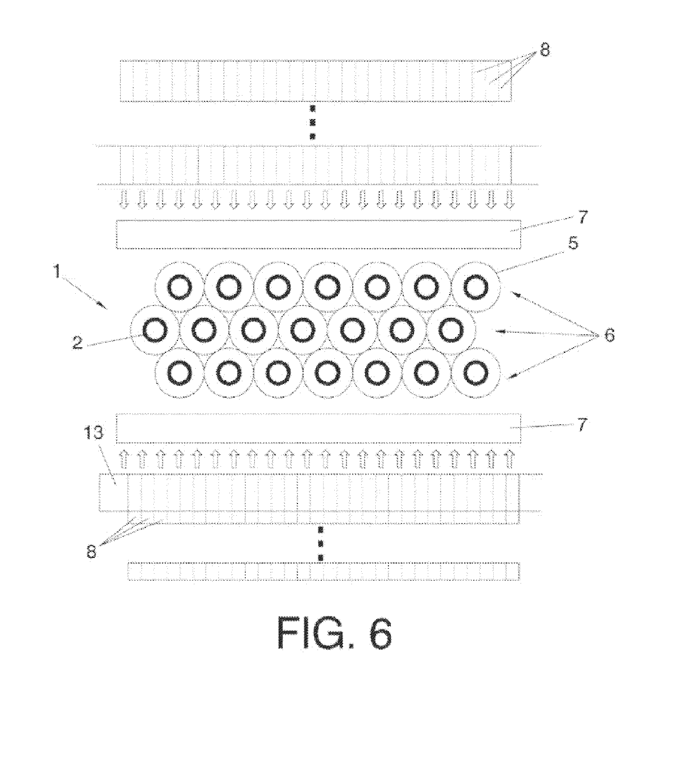

The solar thermal installation in accordance with the invention is shown in figure 1 and comprises concentrated solar collectors (11) provided with focus points (not shown) and tracking devices (not shown) in two axis. The installation additionally comprises a receiver (1) which, in turn, incorporates a plurality of absorber tubes (2) (see figures 2 to 6) which incorporate in their interior a heat transporting fluid which may be circulated through the interior of said absorber tubes (2).

Continuing with figures 2 to 5, the absorber tubes (2) are cylindrical with circular section and are arranged vertically, according to one or various modules, comprising a plurality of absorber tubes (2) arranged consecutively in adjacent position, in a transversal direction to the longitudinal axis where the longitudinal axis of the absorber tubes (2) of each module are contained in at least two planes, so that the longitudinal axis of a specific absorber tube (2) is not contained in the same plane as the longitudinal axis of the immediately adjoining absorber tubes (2). The foregoing description is equivalent to arranging the absorber tubes (2) in at least two rows (3, 6) in an alternate manner, and partially superimposed in normal direction on the planes defined by longitudinal axis in order to ensure that all the incident radiation impacts substantially on one of the absorber tubes (2).

The absorber tubes (2) are manufactured in steel or in a material with the appropriate conductivity and resistance, and are enclosed in glass recipients (4, 5) subject to vacuum of 10⁻⁷ torr type. In accordance with a first embodiment, one or various of such first recipients (4) each house a plurality of absorber tubes (2), in which the absorber tubes (2) are arranged in two first rows (3). In accordance with a second embodiment, the recipients (5) are second tubular recipients (5) and coaxial with absorber tubes (2) in which each absorber tube (2) is housed in a second recipient (5). The absorber tubes (2) are arranged in three second rows (6).

The receiver (1) also incorporates dichroic reflectors (7) in such a way that solar radiation may pass mainly through said dichroic reflectors (7) and impact on the absorber tubes (2) in order to heat them, and the radiation emitted by the absorber tubes (2) may be mainly reflected by the dichroic reflectors (7) to said absorber tubes (2) thus increasing their absorption performance.

The solar installation also incorporates respective flexible light guides (8) adapted to collect at one end (not shown) the radiation in each of the tubes of the concentrator elements, and to transport said radiation to the receiver (1), with the minimum possible energy loss, with said radiation impacting through a second end (12) opposite the first end on the absorber tubes(2) in substantially normal direction on the surface of said absorber tubes(2), The light guides (8) cause the radiation to impact on the absorber tubes (2) from opposite positions with respect to the longitudinal axis of the absorber tubes (8).

The light guides (8) used have a high numerical aperture, in particular those of the PCF type.

In order to obtain increased irradiance, the installation incorporates lenses (14) for combining radiation of at least one set of light guides (8) in at least one combined guide (15). In addition, combined guides (15) etc. may also be combined.

The installation in this invention also comprises a housing (not shown) for receivers, which houses a receiver (1) for the light guides (8) and/or if appropriate, the combined guides (15) where the receivers (1) are mainly located on the ground.

The installation also incorporates a storage means (16) in order to temporarily store energy from the heat transporting fluid which has not yet been transformed into electricity. Some of the guides (8, 15) may be directed to the storage means (16) in order to heat the working fluid, or part of said fluid from the receiver (1) may be stored for subsequent use.

Based on the type of installation, the means of storage (16) may be:
- Hot air/gas tanks in the event that the heat transporting fluid from the absorber tubes (2) is air or gas which feeds a gas turbine (not shown) according to Brayton or Stirling cycles;
- Steam tanks of saturated compressed water, in the event that the heat transporting fluid from the absorber tubes is water which, when converted into steam feeds a steam turbine (not shown,) according to a Rankine cycle, or for which the heat transporting fluid is a liquid salt which heats water, through an exchanger (not shown), for the same purpose;
- High temperature salts (in the event that the heat transporting fluid is a salt for a Rankine cycle).

## Claims

1. Receiver (1) for a solar thermal installation which comprises a plurality of absorber tubes (2) in order to absorb energy from solar radiation impacting on said absorber tubes (2), arranged according to one or various modules which include a plurality of said absorber tubes (2), arranged consecutively and in parallel, in adjacent position with respect to a direction transversal to the longitudinal axis of the absorber tubes (2) which incorporate in their interior a heat transporting fluid, which may be circulated through the interior of said absorber tubes (2), in which the longitudinal axis of the absorber tubes (2) of each module are contained in at least two planes, so that the longitudinal axis of a specific absorber tube (2) is not contained on the same plane as the longitudinal axis of the immediately adjacent absorber tubes (2), defining at least two rows (3, 6) of absorber tubes (2) arranged alternately, and partially superimposed in normal direction on said planes defined by the longitudinal axis of the absorber tubes (2), in such a way that substantially all the incident radiation impacts on any of the absorber tubes (2), **characterised in that** the absorber tubes (2) are included in transparent recipients (4, 5) subjected to vacuum.

2. Receiver (1) for a solar thermal installation according to claim 1, **characterised in that** it comprises at least a first recipient (4) subjected to vacuum arranged to house at least a plurality of absorber tubes (2).

3. Receiver (1) for a solar thermal installation according to claim 1 or 2, **characterised in that** it comprises two first rows (3) of absorber tubes (2).

4. Receiver (1) for a solar thermal installation according to claim 1 or 2, **characterised in that** at least one absorber tube (2) is enclosed in a second individual recipient (5) subjected to vacuum.

5. Receiver (1) for a solar heating installation according to claim 4, **characterised in that** the second recipient (5) is tubular, made from glass, with circular section, coaxial with respect to its corresponding absorber tube (2).

6. Receiver (1) for a solar thermal installation according to claim 4 or 5 **characterised in that** the diameter of the absorber tubes (2), the section dimensions of the recipients (4, 5) and the number of rows (3, 6) of absorber tubes (2) are related in such a way that substantially all of the incident radiation falls on any of the absorber tubes (2) so that said radiation does not pass to the semi space opposite with respect to the absorber tubes thus failing to impact on any absorber tube.

7. Receiver (1) for a solar thermal installation according to claim 4 or 6, **characterised in that** the number of rows (3, 6) of absorber tubes (2) is three.

8. Receiver (1) for a solar thermal installation according to claim 1, **characterised in that** it also incorporates at least one dichroic reflector (7) substantially more transparent to the solar spectrum than the emission spectrum of the absorber tubes (2) in such a way that solar radiation may pass through the dichroic reflector (7) to a greater degree, and impact on the absorber tubes (2) in order to heat them, and in addition, the radiation emitted by the absorber tubes (2) may be reflected back by the dichroic reflector (7) to the absorber tubes (2), thus increasing the absorption performance.

9. Solar thermal installation which comprises at least one concentration solar collector having two focus for concentrating the solar radiation in said focus point, **characterised in that** it additionally comprises the receiver (1) described in any one of claims 1 to 8.

10. Solar thermal installation according to claim 9, **characterised in that**, in addition, it comprises respective flexible light guides (8) adapted to collect radiation at one end in each of the focus points and transport said radiation towards the receiver (1), causing said radiation to impact on the receiver (1).

11. Solar thermal installation according to claim 10, **characterised in that** the light guides (8) are adapted to cause radiation to impact on the absorber tubes (2) of the receiver in a manner substantially perpendicular to the external surface of the absorber tubes (2)

12. Solar thermal installation according to claim 10 or 11, **characterised in that** the light guides (8) are adapted to cause the radiation to impact on the absorber tubes (2) from opposite positions with respect to the longitudinal axis of the absorber tubes (2) in order to avoid thermoelastic stresses in the absorber tubes (2).

13. Solar thermal installation according to claim 10, **characterised in that** the light guides (8) are provided with a numerical aperture greater than 0.48.

14. Solar thermal installation according to claim 10 or 13 **characterised in that** it additionally incorporates lenses (14) in order to combine radiation of at least one set of light guides (8) in at least one combined guide(15).

15. Solar thermal installation according to claim 9, **characterised in that** the receiver (1) is adapted to transform energy from the heat transporting fluid into electricity, according to at least one cycle selected from a list as follows:
- Brayton Cycle
- Rankine Cycle and
- Stirling Cycle

16. Solar thermal installation in accordance with claim 9, **characterised in that** it additionally comprises storage means (16) in order to temporarily store energy from the heat transporting fluid which has not yet been transformed into electricity.

17. Solar thermal installation according to claim 16, **characterised in that** the storage means (16) are selected from at least a list as follows :
- Hot air/gas tanks, for storing the heat transporting fluid in the form of air or gas which supplies a gas turbine according to a Brayton or Stirling cycle;
- Compressed saturated water steam tanks in the event that the heat transporting fluid in the absorber tubes is water, in order to supply a steam turbine according to a Rankine cycle, once it has been transformed into steam, or in the event that the heat transporting fluid is a liquid salt for heating water through an exchanger for the same purpose;
- High temperature salts in the event that the heat transporting fluid is a salt employed in a Rankine cycle.

18. Solar hating installation according to claim 16 or 17, **characterised in that** at least one part of the light guides (8) are adapted to heat the heat transporting fluid stored in the storage means.

19. Solar thermal installation according to any preceding claim 10 or 14, **characterised in that** it additionally comprises a receiver housing, in order to house the receiver (1), where the guides reach said housing (8,15) in addition to which the receivers (1) are located substantially on the ground inside the housing.
